# EUROPEAN PATENT APPLICATION

(11) **EP 0 780 812 A2**
(43) Date of publication of application: **25.06.1997**
(21) Application number: 96203588.7
(22) Date of filing: 17.12.1996
(51) Int. Cl.: G07F 7/00, G06F 17/60

(54) **Management method and electronic guided sales system for products in a store**

(30) Priority: 19.12.1995 IT MI952665
(71) Applicant: Marazzi Ceramiche S.p.A., 40123 Bologna (IT)
(72) Inventor: Marazzi, Filippo, 41049 Sassuolo (Modena) (IT)
(74) Representative: Faraggiana, Vittorio, Dr. Ing.

(57) **Abstract**

A method permitting purchasers to select desired products from among a plurality of products on sale and issue purchase orders for them comprises the phases of reading by means of a bar code reader bar codes associated with displayed product samples, taking from a data bank information on the products associated with the codes read, showing the information on a display unit, entering in a memory unit the desired quantities of the products associated with the codes read by the reader, and issuing on command a purchase order for the quantities of products contained in the memory unit. In accordance with the method an electronic system comprises a processing unit (14) which receives from the reader (11) bar code signals (12) for products selected with it from among displayed samples (13) and shows on a screen (15) information concerning the signaled products. After selection of the desired product quantities the processing unit commands issuance of a purchase order for the memorized quantities of the products.

## Description

The present invention relates to a management method and an electronic system for the guided sales of products in a store.

The system aims at making it unnecessary for the customer to address the store personnel to choose from among a plurality of products, obtain the estimated cost of the quantities desired, issue the delivery order and if necessary make payment.

The proposed system is particularly useful in case of sale of a plurality of products divided in categories each of which contains an even high quantity of models and variants of each individual model. In particular, the system is addressed to the sale of materials such as tiles, where the customer can usually choose from among a broad range of types, there being for each type a plurality of possible variants (e.g. different colors), and usually has a need or a desire to see samples of the product but does not wish to take directly from the display the goods to be purchased.

In view of the proposed purposes, it was thought to provide in accordance with the present invention a method for permitting purchasers to select desired products from among a plurality of products on sale and issue purchase orders therefore comprising the phases of reading by means of a bar code reader bar codes associated with samples of products on display and corresponding to the desired products on sale, taking from a data bank information on the products associated with the codes read by the reader, showing this information on a display unit, entering in a memory unit desired quantities of the products associated with the codes read by the reader, and issuing on command a purchase order for the quantities of products contained in the memory unit.

In accordance with this method it was thought to provide an electronic system for the purchase of desired products from among a plurality of products comprising samples of displayed products and corresponding to products on sale with each sample having an associated bar code, a processing unit with an associated memory unit, a display screen and an input unit for information associated with the processing unit, a bar code reader for detection of these bar codes and connectable to the processing unit for the transfer thereto of the codes read, a data bank containing information on the products on sale and connected to the processing unit for sending thereto of the information, an issuing unit connected to the processing unit for receiving purchase order issuance commands for products; with the processing unit receiving from the reader bar code signals for products selected therewith from among the displayed samples and showing on the display screen information contained in the data bank and concerning the products signalled; with the processing unit entering in the memory unit desired quantities for each product for which the code was taken and entered through the input unit; with the processing unit awaiting reception from the input unit of a purchase order issuance command; with the processing unit upon receipt of the issuance command sending to the issuance unit a purchase order issuance command for the quantities of products contained in the memory unit.

To clarify the explanation of the innovative principles of the present invention and its advantages compared with the known art there is described below with the aid of the only annexed drawing a possible embodiment thereof by way of non limiting example applying said principles.

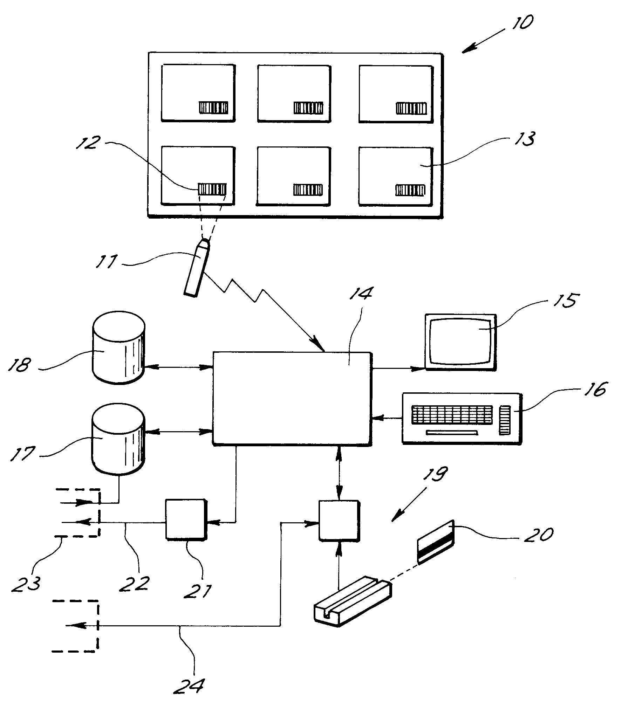

With reference to the figure an electronic system indicated as a whole by reference number 10 and provided in accordance with the present invention comprises one or more readers of optical pens 11 for reading of bar codes 12 associated with samples 13 placed on display and corresponding to the products which can be purchased. For example, the products might be tiles

The reader 11 transfer to a processing unit 14 the codes read. The processing unit 14 is in turn connected to a display unit 15, to a data bank 17, to a memory unit 18 and to a purchase order issuance unit 21. The issuance unit may consist of a printer which issues a printed order and/or a communication unit for sending the order directly along a communication line 22 a known system 23 for order and storage management of the products on sale.

In addition, to the processing unit is advantageously connected a unit 19 for reading and management of credit or debit cards 20. The individual parts of the system are virtually of the prior art and therefore easy to imagine for those skilled in the art. Accordingly they are not further described or shown.

The connection between the bar code reader and the processing unit can be a connection which is established only at the end of the reading operation. For example, the reader may be a portable and independent unit which connects to the processing unit upon its repositioning in a support after use.

The system described is typically installed in a store to which the customers accede for choice and purchase of the products. When a customer desires to make a purchase or have product prices and information he takes a bar code reader from the associated support and reads with it the bar codes of the samples of interest on display in the store.

After this phase the customer connects the reader to the processing unit by returning it to the support. The processing unit thus receives the data on the products of interest for the customer and shows on the display unit information concerning these products and drawn from the data bank 17. This information can be for example the unit price, the technical features, availability, instructions for use, etc. If desired, for each product can be shown explanatory or comparison illustrations and further information can be supplied upon request.

The customer can then enter through an input device 16 the desired product quantities and request for example the list of the products chosen, receive the illustration of the product chosen to confirm that he has correctly entered in the bar code reader the product of interest, receive an expenditure estimate, etc.

After making all his appraisals, changing codes and quantities, seeing the illustration, and requesting necessary information, the customer can then approve the quoted amount and supply to the processing unit through the input unit 16 a purchase order issuance command for the products involved. Upon receipt of the purchase order issuance command the processing unit sends a purchase order issuance command to the purchase order issuance unit 21. The order for the products selected is thus generated.

The warehouse can thus prepare the products and deliver them or send them where specified by the customer when entering the information.

Advantageously, before sending of the order there can be present an automated payment phase during which the processing unit asks the customer to insert his card in the credit or debit card reader.

The management unit 19 reads the credit or debit card and communicates through a communication line 24 with the bank for the transaction. It receives confirmation of the positive outcome of the payment operation, the management device enables the processing unit to issue the order.

During the operation of payment with the card, the management unit 19 can also supply the customer's identity information to the processing unit to save the customer the trouble of entering it manually.

There can also be provided differentiated or priority treatment for particular customers or types of customer.

For example, installers could have special discounts or awards upon reaching a certain number of purchases. To identify the customers with privileges a magnetic identifying card to be entered in the system card read can by supplied to them.

At this point it is clear that the preset goals have been reached.

Naturally the above description of an embodiment applying the innovative principles of the present invention is given merely by way of example and therefore is not to be taken as a limitation of the patent right claimed here.

For example, the display unit can also supply advance illustrations and instructions of help in the use of the system and/or can show advertising illustrations concerning the products on sale and their employment. This can be done even on a screen different from that employed in the next phase after reading of the bar code.

## Claims

1. Electronic system for the purchase of desired products from among a plurality of products and comprising:
- samples of displayed products (13) corresponding to products on sale with each sample having an associated bar code (12),
- a processing unit (14) with an associated memory unit (17),
- a display unit (15) and a data input (16) associated with the processing unit (14),
- a bar code reader (11) for reading of said bar code (12) and connectable to said processing unit (14) for transfer thereto of the codes read,
- a data bank (17) containing information on said products on sale and connected to the processing unit (14) for sending thereto the information, and
- a purchase order issuance unit (21) connected to the processing unit (14) to receive purchase order issuance commands for the products,
with the processing unit (14) receiving from the reader (11) bar code signals for the products selected therewith from among the samples displayed (13) and showing on the display screen (15) data contained in the data bank (17) and referring to the products signaled and with the processing unit (14) entering in the memory unit (18) the desired quantities of each product of which the code was taken and entered through the input unit (16) and with the processing unit (14) waiting for reception from the input unit (16) of a purchase order issuance command for the products signaled and upon reception of the issuance command the processing unit (14) sending to the purchase order issuance unit (21) a purchase order issuance command for the quantities of products contained in the memory unit (18).

2. Electronic system in accordance with claim 1 and characterized in that it comprises a magnetic card reader (19) which is connected to the processing unit (14) and to an external communication line (24) upon reception of the purchase order issuance command the processing unit (14) reading a magnetic payment card (20) positioned in the magnetic card reader (19) and requiring a payment transaction through the communication line (24) and with the processing unit (14) sending the purchase order issuance command to the purchase order issuance unit (21) after reception along the communication line (24) of a completed transaction signal.

3. Electronic system in accordance with claim 1 and characterized in that the data bank (17) contains information on the existence or not of products in stock.

4. Electronic system in accordance with claim 1 and characterized in that it comprises magnetic cards containing recognition information for a user of the system and a reader (19) of said magnetic cards connected to the processing unit (14).

5. Method permitting a purchaser to select desired products from among a plurality of products on sale and issue purchase orders therefor and comprising the phases of reading by means of a bar code reader for reading bar codes associated with samples of products on display and corresponding to the desired products on sale, drawing from a data bank information concerning the products associated with the codes read by the reader, showing said information on a display unit, entering in a memory unit the desired quantities of the products associated with the codes read by the reader, and issuing on command a purchase order for the quantity of products contained in the memory unit.

6. Method in accordance with claim 5 and comprising the additional phase of accepting a payment by means of a credit card before issuing a purchase order for the quantities of products contained in the memory unit.
